# EUROPEAN PATENT APPLICATION

(11) **EP 2 130 604 A2**
(43) Date of publication of application: **09.12.2009**
(21) Application number: 09006090.6
(22) Date of filing: 04.05.2009
(51) Int. Cl.: B01J 35/04, B01J 29/00, B01D 53/92, F01N 3/00

(54) **Honeycomb structure**

(30) Priority: 20.05.2008 WO PCT/JP2008/059262
(71) Applicant: Ibiden Co., Ltd., Ogaki-shi, Gifu 503-8604 (JP)
(72) Inventor: Ohno, Kazushige, Ibi-Gun Gifu 501-0695 (JP); Ido, Takahiko, Ibi-Gun Gifu 501-0695 (JP)
(74) Representative: HOFFMANN EITLE

(57) **Abstract**

A disclosed honeycomb structure includes a honeycomb unit having plural cells extending from one end face to another end face of the honeycomb unit in a longitudinal direction. The plural cells are separated by cell walls. The honeycomb unit includes an inorganic binder and zeolite ion-exchanged with two or more kinds of metal ions.

## Description

### BACKGROUND OF THE INVENTION

### 1. Field of the Invention

The present invention relates to a honeycomb structure.

### 2. Description of the Related Art

Conventionally, various techniques have been developed to convert automotive exhaust gas. However, with an increase in traffic, satisfactory countermeasures have not been taken for the conversion of exhaust gas. Emission restrictions will become tighter not only in Japan but all over the world. In particular, a restriction of NOx in diesel exhaust gas is becoming very strict. A conventional method to reduce NOx by controlling an engine combustion system is not sufficient anymore. As a diesel NOx converting system for such problems, there is a NOx reduction system (called an SCR system) using ammonia as a reducing agent.

As a catalyst supporter used in such a system, a honeycomb structure as disclosed in Patent Document 1 is widely known. This honeycomb structure is formed of combined honeycomb units, which are formed by mixing γ alumina, ceria, zirconia, zeolite, or the like with an inorganic binder and an inorganic fiber for reinforcement to form a mixture, and firing the mixture molded in a honeycomb shape. As a result, a strength, which is a significant feature of a catalyst supporter for a use in an automobile, is improved.

Patent Document 2 discloses a NOx converting apparatus for exhaust gas emitted from a fixed exhaust gas source such as a boiler or a heating furnace. This NOx converting apparatus for exhaust gas is a urea SCR (Selective Catalytic Reduction) system formed of a honeycomb structure including Fe ion-exchanged zeolite. The Fe ion-exchanged zeolite efficiently converts NOx in exhaust gas at a high temperature of 400 to 700°C.

Patent Document 1: International Publication No. 2005/063653

Patent Document 2: Japanese Patent Application Publication No. 09-103653

As disclosed in Patent Document 2, it is known that zeolite, Fe ion-exchanged zeolite in particular, can efficiently convert NOx in exhaust gas by reducing NOx using ammonia. In the honeycomb structure disclosed in Patent Document 2, although NOx can be removed with high efficiency from exhaust gas at a high temperature of 400°C or higher, NOx cannot be sufficiently removed from exhaust gas at a relatively low temperature of lower than 400°C. Therefore, this honeycomb structure sometimes cannot exhibit a sufficient converting ability with respect to exhaust gas which frequently fluctuates in temperature in a range from a low temperature to a high temperature, such as automotive exhaust gas.

### SUMMARY OF THE INVENTION

The invention is made in light of the above circumstances and may provide a honeycomb structure which exhibits a superior reaction activity in a temperature region of automotive exhaust gas, and may sufficiently convert NOx in exhaust gas of which temperature drastically changes.

Means for solving the problem of the present invention are described below.

According to one aspect of the present invention, a honeycomb structure includes a honeycomb unit having plural cells extending from one end face to another end face of the honeycomb unit in a longitudinal direction. The plural cells are separated by cell walls. The honeycomb unit includes an inorganic binder and zeolite ion-exchanged with two or more kinds of metal ions.

According to another aspect of the present invention, in the above-described honeycomb structure, zeolite is ion-exchanged with at least one metal ion selected from Cu, Fe, Ni, Zn, Mn, Co, Ag, and V.

According to another aspect of the present invention, in the above-described honeycomb structure, zeolite ion-exchanged with two or more kinds of metal ions is included in the honeycomb unit at different ratios in a direction of through-holes of the cells.

According to another aspect of the present invention, in the above-described honeycomb structure, zeolite is β-type zeolite, Y-type zeolite, ferrierite, ZSM-5 type zeolite, mordenite, faujasite, zeolite A, or zeolite L.

According to another aspect of the present invention, in the above-described honeycomb structure, the honeycomb unit further includes an inorganic particle other than zeolite.

According to another aspect of the present invention, in the above-described honeycomb structure, the inorganic particle other than zeolite includes an alumina particle, a titania particle, a silica particle, a zirconia particle, or a precursor of the alumina particle, the titania particle, the silica particle, or the zirconia particle.

According to another aspect of the present invention, in the above-described honeycomb structure, the honeycomb unit further includes an inorganic fiber.

According to another aspect of the present invention, in the above-described honeycomb structure, the inorganic fiber includes at least one of an alumina fiber, a silica fiber, a silicon carbide fiber, a silica alumina fiber, a glass fiber, a potassium titanate fiber, and an aluminum borate fiber.

According to another aspect of the present invention, in the above-described honeycomb structure, the inorganic binder includes at least one of alumina sol, silica sol, titania sol, liquid glass, sepiolite, and attapulgite.

According to another aspect of the present invention, in the above-described honeycomb structure, a plurality of the honeycomb units are bonded to each other by interposing an adhesive material.

According to one embodiment of the present invention, a honeycomb structure, which exhibits a superior reactive activity in a temperature range of automotive exhaust gas and can sufficiently convert NOx of exhaust gas of which temperature drastically changes, can be provided.

### BRIEF DESCRIPTION OF THE DRAWINGS

FIGS. 1A and 1B are perspective views of honeycomb structures of the present invention, FIG. 1A shows a honeycomb structure formed of plural honeycomb units, and FIG. 1B shows a honeycomb structure formed of one honeycomb unit; and
FIG. 2 is a perspective view of a honeycomb unit which is included in the honeycomb structure shown in FIG. 1A.

### DETAILED DESCRIPTION OF THE PREFERRED EMBODIMENTS

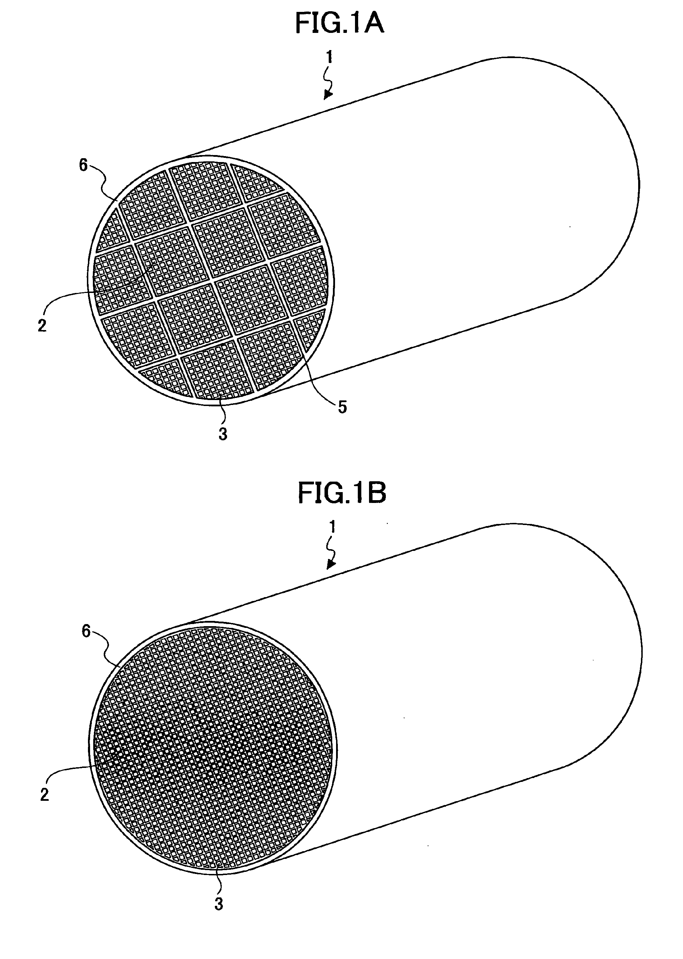

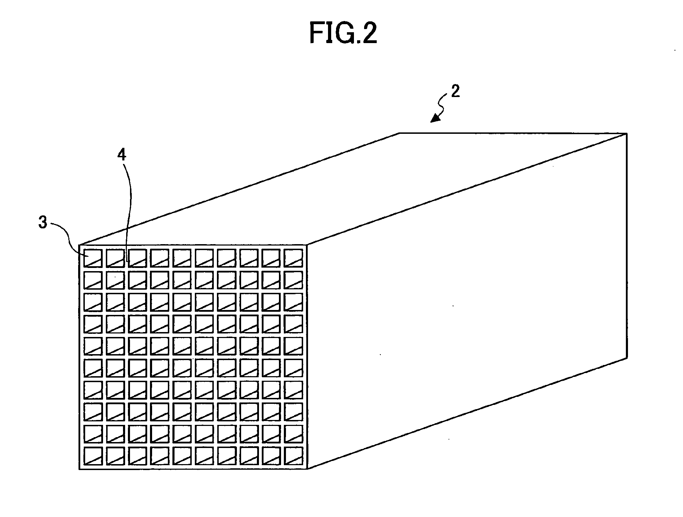

A honeycomb structure of the present invention includes one or more honeycomb units each serving as a fired body formed of plural cells extending from one end face to another end face in a longitudinal direction, which are separated by cell walls. An example of the honeycomb structure is shown in the perspective view of FIG. 1A. A honeycomb structure 1 shown in FIG. 1A includes plural honeycomb units 2 bonded to each other with an adhesive material 5 and arranged together. Each honeycomb unit 2 is formed so that cells 3 are aligned in parallel to each other in the longitudinal direction. Another example of the honeycomb structure is shown in the perspective view of FIG. 1B. FIG. 1B shows an example in which a honeycomb structure 1 is formed of one honeycomb unit 2. In this manner, the honeycomb unit 1 may be formed of one or plural honeycomb units 2. It is preferable that a side surface (a surface where the cells are not open) of the honeycomb structure 1 be covered with a coating material layer 6 to keep the strength of the honeycomb structure. As shown in the example of the perspective view of FIG. 2, the honeycomb unit 2 included in the honeycomb structure 1 includes plural cells 3 extending in the longitudinal direction and cell walls 4 separating the cells 3.

### (Raw material of honeycomb unit)

A honeycomb unit in the honeycomb structure of the present invention includes zeolite and an inorganic binder. The zeolite has ions exchanged with at least two kinds of metal ions. The honeycomb structure of the present invention may further include an inorganic fiber and inorganic particles other than zeolite.

The honeycomb structure of the present invention includes zeolite ion-exchanged with at least two kinds of metal ions as the whole honeycomb unit. In the honeycomb structure of the present invention, one honeycomb unit may uniformly include two or more kinds of zeolite, or may partially include two or more kinds of zeolite. Further, in the honeycomb structure of the present invention, the honeycomb units may include zeolite ion-exchanged with different metal species of ions from each other. The honeycomb units may include the same kind of zeolite ion-exchanged with ions of different metal species from each other, or include different kinds of zeolite ion-exchanged with ions of different metal species from each other. Moreover, one honeycomb unit may include zeolite of different kinds and/or with ions exchanged with ions of different metal species.

Compositions and raw materials of the honeycomb unit are described below, with an example in which one honeycomb unit uniformly includes zeolite ion-exchanged with two or more kinds of metal ions.

### (Zeolite)

Zeolite is bound with an inorganic binder. Zeolite, having an effect to adsorb ammonium gas, is an important substance as a NOx reducing catalyst for exhaust gas in the honeycomb structure of the present invention. Any zeolite having a desired adsorbing effect of ammonium can be used. As zeolite, for example, there are β-type zeolite, Y-type zeolite, ferrierite, ZSM-5 type zeolite, mordenite, faujasite, zeolite A, zeolite L, and the like.

The honeycomb structure of the present invention has a honeycomb unit including zeolite ion-exchanged with two or more kinds of metal ions. The exchange of the ions in zeolite may be performed in a raw material stage or after the honeycomb unit or the honeycomb structure is formed.

As combinations of two kinds of zeolite to form zeolite ion-exchanged with two kinds of metal ions, there are a combination of the same kind of zeolite (the same zeolite except that ions exchanged with different kinds of ions are included, the same applies below in this paragraph) ion-exchanged with two kinds of metal ions, a combination of different kinds of zeolite each ion-exchanged with different kinds of metal ions from each other, a combination of the same kind of zeolite ion-exchanged with the same kind of metal ion with different charge numbers from each other, and the like. The combinations of two kinds of zeolite are described above, however, the combination of zeolite of the present invention may further include third zeolite, fourth zeolite, and the like.

As the metal ions, for example, at least one of Cu, Fe, Ni, Zn, Mn, Co, Ag, and V is used.

It is preferable that raw material zeolite have a mole ratio of silica to alumina (silica/alumina ratio) being 1 to 100. The silica/alumina ratio of zeolite influences an acid level of zeolite, that is the adsorption and reactivity of reactive molecules. Thus, there are preferable regions of the silica/alumina ratio depending on the applications.

It is preferable that the content of zeolite in the honeycomb unit per apparent unit volume of the honeycomb unit be 250 to 700 g/L. In another view, it is preferable that the rate of content of zeolite in the honeycomb unit be 60 to 80 mass%. Zeolite has an adsorbing effect, therefore, it is preferable that the content of zeolite in the honeycomb structure be larger to enhance the adsorbing effect. However, when only the content of zeolite is increased, contents of other constitutive substances (for example, an inorganic fiber and an inorganic binder) have to be reduced, which leads to the reduction in strength of the honeycomb unit.

It is preferable that zeolite include secondary particles having an average particle diameter of 0.5 to 10 µm. The average particle diameter of the secondary particles of zeolite can be measured by using zeolite particles as a raw material, which are the secondary particles of zeolite, before firing to form the honeycomb unit.

### (Inorganic binder)

The inorganic binder may be, for example, inorganic sol, a clay-type binder, or the like. As the inorganic sol, for example, there are alumina sol, silica sol, titania sol, sepiolite sol, attapulgite sol, liquid glass, and the like. As the clay-type binder, for example, there are white clay, kaolin, montmorillonite, plural chain structure type clay (sepiolite and attapulgite), and the like. These inorganic sol and clay-type binders may be used alone or in combination. An amount of the inorganic binder included in the honeycomb structure is preferably 5 to 30 mass% as a solid content included in the honeycomb unit, and more preferably 10 to 20 mass%. When the content of the inorganic binder is less than or more than 5 to 30 mass%, the strength of the honeycomb unit may be decreased or a moldability of the honeycomb unit may be degraded.

### (Inorganic fiber)

In the honeycomb structure of the present invention, a honeycomb unit may include an inorganic fiber. The inorganic fiber included in the honeycomb unit is not particularly limited, and may be one or more kinds of inorganic fibers selected from an alumina fiber, a silica fiber, a silicon carbide fiber, a silica alumina fiber, a glass fiber, a potassium titanate fiber, and an aluminum borate fiber. These inorganic fibers may be mixed with zeolite or an inorganic binder in a raw material stage and molded and fired to form a honeycomb unit. The inorganic fiber is, together with the inorganic binder, zeolite, and the like, formed into a fiber reinforcement fired body which functions to improve the strength of the honeycomb unit.

The inorganic fiber is an inorganic material having a large aspect ratio (fiber length/fiber diameter) and is especially effective in improving a bending strength. The aspect ratio of the inorganic fibers is preferably 2 to 1000, more preferably 5 to 800, and further more preferably 10 to 500. When the aspect ratio of the inorganic fibers is less than 2, its contribution to an increase in the strength of the honeycomb unit may be reduced. On the other hand, an aspect ratio greater than 1000 is likely to cause clogging of a die for extrusion molding at the time of honeycomb unit molding, which may result in poor moldability. Further, at the time of molding such as extrusion molding, the inorganic fibers may be broken into various lengths, which may reduce the strength of the honeycomb unit. In the case where the aspect ratios of the inorganic fibers are distributed, the aspect ratio of the inorganic fibers may be at their average. Note that the inorganic fiber includes a whisker.

The content of the inorganic fibers included in the honeycomb unit is preferably 3 to 50 mass%, more preferably 3 to 30 mass%, and further more preferably 5 to 20 mass%. When the content of the inorganic fibers is less than 3 mass%, the strength of the honeycomb unit is reduced. When the content of the inorganic fiber is more than 50 mass%, the content of zeolite which contributes to the conversion of NOx is relatively decreased, which degrades a NOx converting property.

### (Inorganic particle)

In the honeycomb structure of the present invention, a honeycomb unit may include inorganic particles other than zeolite particles. The inorganic particles other than zeolite contribute to the improvement of the strength of the honeycomb unit. In the honeycomb structure of the present invention, the inorganic particles other than zeolite included in the honeycomb unit are not limited in particular, and may be, for example, alumina particles, silica particles, zirconia particles, titania particles, ceria particles, mullite particles, and precursors thereof. Among these particles, it is preferable to use alumina particles or zirconia particles. As the alumina particles, it is preferable to use γ alumina or boehmite. One or more kinds of these inorganic particles may be included in the honeycomb unit.

The inorganic particles in the honeycomb unit of the present invention have a hydroxyl group in a stage of raw material inorganic particles before firing. As most of inorganic compound particles for industrial use do, raw material inorganic particles other than raw material zeolite and raw material zeolite particles in the honeycomb unit of the present invention before firing have hydroxyl groups. These hydroxyl groups function to cause a dehydration condensation reaction which enhances bonds between the particles when firing to form a honeycomb unit. The raw material inorganic particles such as the alumina particles, in particular, are strongly bonded by a dehydration condensation reaction that occurs at firing.

In the honeycomb structure of the present invention, it is preferable that the inorganic particles other than zeolite used as a raw material of the honeycomb unit include secondary particles, and the inorganic particles other than zeolite have secondary particles with an average particle diameter equal to or less than an average particle diameter of secondary particles of zeolite. In particular, it is preferable that the average particle diameter of the inorganic particles other than zeolite be 1/10 to 1/1 of the average particle diameter of zeolite. In this manner, the strength of the honeycomb unit is improved by a bonding force of the inorganic particles other than zeolite having a small average particle diameter.

The content of the inorganic particles other than zeolite included in the honeycomb unit is preferably 3 to 30 mass%, and more preferably 5 to 20 mass%. When the content of the inorganic particles other than zeolite is less than 3 mass%, their contribution to an improvement of the strength of the honeycomb unit may be reduced. When the content of the inorganic particles other than zeolite is more than 30 mass%, the content of zeolite which contributes to the conversion of NOx is relatively decreased, which may degrade a NOx converting property.

### (Catalytic component)

A cell wall of a honeycomb unit in the honeycomb structure of the present invention may further carry a catalytic component. The catalytic component is not particularly limited, and may be a noble metal, an alkali metal compound, an alkaline earth metal compound, and the like. As the noble metal, for example, one or more of platinum, palladium, and rhodium is suggested. As the alkali metal compound, one or more compounds of potassium, sodium, and the like are suggested. As the alkaline earth metal compound, for example, a compound of barium and the like is suggested.

### (Honeycomb unit)

A face of a honeycomb unit of the honeycomb structure of the present invention, which is vertical to the longitudinal direction of the cells (simply referred to as a cross section, hereinafter), may be in a square shape, a rectangular shape, a hexagonal shape, and a sector shape.

FIGS. 1A and 1B are perspective views showing examples of honeycomb units. The honeycomb unit 2 includes plural cells 3, which are through-holes extending from a left front side to a right rear side in the drawings. The thickness of the cell walls separating the cells 3 is not particularly limited, but preferably is in a range of 0.10 to 0.50 mm, and more preferably 0.15 to 0.35 mm. When the thickness of the cell walls is less than 0.10 mm, the strength of the honeycomb unit is reduced. When the thickness of the cell walls is more than 0.50 mm, exhaust gas does not easily penetrate inside the cell wall. Thus, the NOx converting property may be degraded. Further, it is preferable that an aperture ratio (opening ratio) of the cells in the cross section that is vertical to the through-holes of cells in the honeycomb unit, that is an area ratio thereof, be 40 to 80%. It is preferable that the aperture ratio be 40 to 80% in view of suppressing a pressure loss and keeping the amount of the cell walls which serve as supports of the catalytic component.

The number of cells per unit cross sectional area is preferably 15.5 to 93/cm² (100 to 600 cpsi), and more preferably 31 to 77.5/cm² (200 to 500 cpsi).

A cross-sectional shape of the cell 3 formed in the honeycomb unit is not particularly limited. The cell 3 in the example of FIG. 2 has a cross section in a square shape, however, the cross section shape of the cell 3 may be in a substantial triangle shape, a substantial hexagonal shape, or a substantial circle.

### (Manufacture of honeycomb unit)

An example of a method for manufacturing a honeycomb unit in the honeycomb structure of the present invention is described. First, a raw material paste including, as major components, an inorganic binder and zeolite ion-exchanged with the above-described two or more kinds of metal ions is prepared. This raw material paste is then formed into a honeycomb unit molded body by extrusion molding and the like. The raw material paste may further include the above-described inorganic fiber, an inorganic particle other than zeolite, an organic binder, a disperse medium, a forming aid, and the like as required. The organic binder is not particularly limited, and may be one or more organic binders selected from methylcellulose, carboxymethyl cellulose, hydroxyethyl cellulose, polyethylene glycol, a phenol resin, an epoxy resin, and the like. The organic binder is preferably mixed with the raw material paste in a ratio of 1 to 10 parts by weight with respect to 100 parts by total weight of a solid content of the raw material of the honeycomb unit. The disperse medium is not particularly limited and may be, for example, water, a hydrocarbon-based organic solvent (such as toluene), alcohol (such as methanol) and the like. The forming aid is not particularly limited, and may be, for example, ethylene glycol, dextrin, fatty acid soap, polyalcohol, and the like.

The raw material paste is not particularly limited, but preferably formed by mixing or kneading materials. For example, a mixer, an attritor, and the like may be used to mix the materials, and a kneader or the like may be used to sufficiently knead the materials. The method to mold the raw material paste is not particularly limited. For example, it is preferable to mold the raw material paste by extrusion molding or the like into a honeycomb unit in a shape having the cells.

Next, the honeycomb unit molded body is dried to remove the disperse medium such as water and an organic solvent. A drier used for drying is not limited in particular, and may be a microwave drying apparatus, a hot air drying apparatus, a dielectric drying apparatus, a reduced-pressure drying apparatus, a vacuum drying apparatus, a freeze drying apparatus, and the like. Further, it is preferable to degrease the obtained molded body. The conditions for degreasing are not limited in particular, and are selected suitably in accordance with the kind and amount of the organic matter included in the molded body. Preferably, the conditions are a heating temperature of 400°C and a heating time of approximately two hours.

Further, the dried and degreased honeycomb unit molded body is fired. The conditions for firing the honeycomb unit molded body are not particularly limited, but the temperature is preferably 600 to 1200°C, or more preferably 600 to 1000°C. With the firing temperature of lower than 600°C, sintering of the honeycomb unit does not proceed, therefore, the strength of the honeycomb unit is not increased in some cases. With the firing temperature of higher than 1200°C, there are cases where zeolite crystals are broken or the sintering proceeds too much. Thus, a porous honeycomb unit may not be manufactured in those cases.

### (Manufacture of honeycomb structure)

Next, a method for manufacturing a honeycomb structure formed of the plural honeycomb units is described. An adhesive material to serve as walls between the honeycomb units is applied onto side surfaces of the honeycomb units that are obtained as described above, and the honeycomb units are sequentially bonded to each other. The honeycomb units bonded to each other are dried and solidified to form a honeycomb unit bonded body in a predetermined size. A side surface of the honeycomb unit bonded body is cut and processed to form a honeycomb unit bonded body in a desired shape.

The adhesive material is not particularly limited, but for example, an adhesive material prepared by mixing an inorganic particle in an inorganic binder, an adhesive material prepared by mixing an inorganic fiber in an inorganic binder, an adhesive material prepared by mixing an inorganic particle and an inorganic fiber in an inorganic binder can be used, and the like. Moreover, an organic binder may be added to these adhesive materials. The organic binder is not particularly limited, and may be one or more organic binders selected from polyvinyl alcohol, methyl cellulose, ethyl cellulose, carboxymethyl cellulose, and the like.

It is preferable that the adhesive material layer bonding the plural honeycomb units have a thickness of 0.5 to 2 mm. The number of honeycomb units to be bonded may be appropriately determined in accordance with a size of the honeycomb structure. The honeycomb unit bonded body formed by bonding the honeycomb units with the adhesive material may be appropriately cut or polished in accordance with the shape of the honeycomb structure.

A coating material is applied to an exterior surface (an exterior surface provided parallel to the through-holes of the cells) of the honeycomb structure, where the through-holes are not open, and dried and solidified to form a coating material layer. In this manner, the exterior surface of the honeycomb structure is protected, and the strength of the honeycomb structure can be enhanced.

The coating material is not particularly limited, and the same material as the adhesive material or a different material than the adhesive material may be used. The coating material may have the same or different blending ratio as the adhesive material. The thickness of the coating material layer is not particularly limited, and preferably is in the range of 0.1 to 2 mm. The coating material layer may not be formed if unnecessary.

After bonding the plural honeycomb units with the adhesive material, the honeycomb unit bonded body preferably undergoes a heating process. When the coating material layer is provided, the honeycomb unit bonded body is preferably heated after forming the adhesive material layer and the coating material layer. When an organic binder is included in the adhesive material and the coating material, the organic binder can be degreased to be removed by the heating process. The conditions of the heating process may be determined depending on the kind and amount of the included organic matter, and the conditions are preferably a heating temperature of about 700°C and a heating time of about two hours.

As an example of the honeycomb structure, FIG. 1A shows a schematic perspective view of the honeycomb structure 1 formed by bonding plural rectangular pillar honeycomb units 2 each having a square cross-sectional shape, and shaped to have a cylindrical outer shape. The honeycomb structure 1 is formed by bonding the honeycomb units 2 with the adhesive material 5, cutting a peripheral part of a body of the honeycomb units bonded together into a cylindrical shape, and forming the coating layer 6 thereover. The honeycomb units 2 with a cross-section in a shape of, for example, a sector shape or a square shape may be formed and bonded to each other so that a honeycomb structure in a predetermined shape can be formed without the cutting and polishing steps.

A method for manufacturing a honeycomb structure formed of one honeycomb unit is described below. In a similar manner to the above-described manufacturing method of the honeycomb structure formed of the plural honeycomb units, a honeycomb unit is formed in a cylindrical shape and a coating material layer is formed over an exterior surface (an exterior surface parallel to the through-holes of the cells) thereof. In this manner, a honeycomb structure formed of one honeycomb unit as shown in FIG. 1B can be manufactured. The coating material layer may not be formed if unnecessary.

### [Examples]

Hereinafter, examples of a honeycomb structure manufactured with various conditions are described. The present invention is not limited to these examples.

### (Example 1)

### (Manufacture of honeycomb unit)

As first ion-exchanged zeolite, 50 mass% of Cu ion-exchanged β-type zeolite (3 mass% of Cu-exchanged ions, a silica/alumina ratio of 40, a specific surface area of 110 m²/g, and an average particle diameter of 2 µm (the average particle diameter is an average particle diameter of secondary particles, the same applies hereinafter), shown as ion 1 in Table 1), and as second ion-exchanged zeolite, 50 mass% of Fe ion-exchanged β-type zeolite (3 mass% of Fe-exchanged ions, a silica/alumina ratio of 40, a specific surface area of 110 m²/g, and an average particle diameter of 2 µm, shown as ion 2 in Table 1), were prepared and mixed to form mixed zeolite. 2250 parts by mass of this mixed zeolite, 680 parts by mass of alumina fibers (an average fiber diameter of 6 µm and an average fiber length of 100 µm), 2600 parts by mass of alumina sol (with a solid concentration of 20 mass%), and 320 parts by mass of methylcellulose as an organic binder were mixed. Further, a plasticizer, a surfactant, and a lubricant were added at small amounts to the mixture. By mixing and kneading the mixture by controlling the viscosity with water, a mixed composition to be molded was obtained. Next, this mixed composition was extruded and molded by an extruder, thereby a raw honeycomb molded body was formed.

### (Manufacture of honeycomb structure)

The raw honeycomb molded body was then sufficiently dried by using a microwave drying apparatus and a hot air drying apparatus and degreased at 400°C for two hours. After that, the honeycomb molded body was fired at 700°C for two hours, thereby a honeycomb unit in a rectangular pillar shape (cross-section of 35 mm × 35 mm × length 150 mm) having cells each in a quadrangular (square) shape, with a cell density of 93 cells/cm² and a wall thickness of 0.2 mm was obtained. Blending ratios (mass%) of the first ion-exchanged zeolite and the second ion-exchanged zeolite are shown in Table 1. Note that Fe ion-exchanged zeolite has ions exchanged with Fe by using a ferric nitrate aqueous, Cu ion-exchanged zeolite has ions exchanged with Cu by using an aqueous cupric nitrate, Ni ion-exchanged zeolite has ions exchanged with Ni by using an aqueous nickel nitrate, and Co ion-exchanged zeolite has ions exchanged with Co by using an aqueous cobalt nitrate. The amounts of the ions to be exchanged were obtained by an IPC light emission analysis using an ICPS-8100 (manufactured by SHIMADZU CORPORATION).

**[Table 1]**

| | Zeolite | | | | | Evaluation (converting property) | | | |
|---|---|---|---|---|---|---|---|---|---|
| | Ion 1 | Blending ratio (mass%) | Ion 2 | Blending ratio (mass%) | Support position | 200°C | 300°C | 400°C | 500°C |
| Example 1 | Fe | 50 | Cu | 50 | blended | 100 | 97 | 90 | 82 |
| Example 2 | Fe | 50 | Ni | 50 | blended | 100 | 96 | 85 | 80 |
| Example 3 | Fe | 50 | Co | 50 | blended | 100 | 95 | 88 | 82 |
| Example 4 | Fe | 70 | Cu | 30 | blended | 100 | 93 | 86 | 80 |
| Example 5 | Fe | 30 | Cu | 70 | blended | 95 | 97 | 90 | 81 |
| Example 6 | Fe | 50 | Cu | 50 | front and rear | 97 | 97 | 90 | 80 |
| Comparative Example 1 | Fe | 100 | - | - | - | 100 | 90 | 85 | 70 |
| Comparative Example 2 | Cu | 100 | - | - | - | 70 | 97 | 90 | 83 |

An adhesive material paste was applied over side surfaces of the obtained honeycomb units to form an adhesive material layer with a thickness of 1 mm. Then, four stages and four rows of the honeycomb units were bonded to each other and dried and solidified at 120°C to form a honeycomb unit bonded body in a substantial rectangular pillar shape. The adhesive material paste was formed by mixing 29 mass% of γ alumina particles (an average particle diameter of 2 µm), 7 mass% of silica-alumina fibers (an average fiber diameter of 10 µm and an average fiber length of 100 µm), 34 mass% of silica sol (30 mass% of solid concentration), 5 mass% of carboxymethyl cellulose, and 25 mass% of water. A side wall (a side wall parallel to the through-holes of the cells) of the honeycomb unit bonded body was cut by using a diamond cutter to obtain a honeycomb unit bonded body in a cylindrical shape. A coating material paste (the same material paste as the adhesive paste) was applied with a thickness of 0.5 mm over an outer surface of the side wall of the honeycomb unit bonded body in the cylindrical shape, thereby a cylindrical honeycomb unit bonded body in the same shape as the honeycomb structure shown in FIG. 1A was manufactured. The cylindrical honeycomb unit bonded body was dried and solidified at 120°C and held at 700°C for two hours to degrease the adhesive material layer and the coating material layer. In this manner, a honeycomb structure in a cylindrical shape (with a diameter of about 144 mm × length of 150 mm) was manufactured.

### (Performance evaluation of honeycomb structures)

Cylindrical honeycomb portions with a diameter of 30 mm and a length of 50 mm were cut out of the above-described honeycomb unit, to be used as evaluation samples. The evaluation samples were heated at 700°C for 48 hours so as to simulate aging. Then, with the evaluation samples kept at 200°C, simulated automotive exhaust gas with a composition as shown in Table 2 heated at 200°C was introduced to evaluate reducing ratios (%) of a NO composition in the simulation gas between front and back of the honeycomb portions (evaluation examples), as converting performances. In a similar manner, the temperature of the simulation gas and the holding temperature of the evaluation samples were changed at 300°C, 400°C, and 500°C to evaluate the converting performances of the evaluation samples. The evaluation results are shown in Table 1. In Table 1, a supported position of zeolite in the honeycomb structure, shown as "blended", indicates that the first ion-exchanged zeolite and the second ion-exchanged zeolite are mixed to form the honeycomb unit (evaluation sample).

**[Table 2]**

| Simulation gas | Blending ratio |
|---|---|
| N₂ | Balance |
| CO₂ | 5 vol% |
| O₂ | 14 vol% |
| NO | 350 ppm |
| NH₃ | 350 ppm |
| H₂O | 5 vol% |
| SV | 40000/hr |

### (Examples 2 to 5)

As shown in Table 1, evaluation samples of Examples 2 to 5 were manufactured similarly to Example 1, except that the ratios of the first ion-exchanged zeolite and the second ion-exchanged zeolite were changed. The blending ratios (mass%) of the first ion-exchanged zeolite and the second ion-exchanged zeolite of Examples 2 to 5, and their evaluation results using a simulation gas similar to Example 1, are shown in Table 1.

### (Example 6)

A honeycomb structure including zeolite having no exchanged ions as a zeolite composition was manufactured in a similar manner to Example 1, except that zeolite having no exchanged ions (β-type zeolite, a silica/alumina ratio of 40, a specific surface area of 110 m²/g, and an average particle diameter of 2 µm) was used instead of the first ion-exchanged zeolite and the second ion-exchanged zeolite in Example 1. Then, a half part (75 mm in the front side) from an end face in the longitudinal direction of the honeycomb structure was ion-exchanged by using an aqueous ferric nitrate ammonium (Fe³⁺) at a ratio of 3 weight% with respect to zeolite. In a similar manner, the remaining half part (75 mm in the back side) of this honeycomb structure was ion-exchanged by using an aqueous cupric nitrate (Cu²⁺) at a ratio of 3 mass% with respect to zeolite. A honeycomb structure of Example 6 was manufactured in this manner.

The honeycomb structure used as the evaluation sample here was formed by cutting and processing the honeycomb structure before undergoing ion exchange of zeolite into a honeycomb structure in a cylindrical shape having a diameter of 30 mm and a length of 50 mm. A part of 25 mm from one end of the obtained honeycomb structure in the longitudinal direction (front side) was ion-exchanged by using an aqueous ferric nitrate ammonium (Fe³⁺), while the part of 25 mm from another end of the honeycomb structure in the longitudinal direction (rear side) was ion-exchanged by using an aqueous cupric nitrate (Cu²⁺), each at a ratio of 3 mass% with respect to zeolite. In the evaluation using the simulated exhaust gas, the front side of the evaluation sample was used as an inlet side while the rear side thereof was used as an outlet side of the simulation gas.

An expression "front and rear" shown as the supported position in Table 1 indicates that a front side of the evaluation sample supports the first ion-exchanged zeolite and a rear side of the honeycomb structure supports the second ion-exchanged zeolite. Blending ratios (mass%) of the first ion-exchanged zeolite and the second ion-exchanged zeolite of Example 6 and an evaluation result thereof by using a simulation gas similar to that of Example 1 are shown in Table 1.

### (Comparative examples 1 and 2)

The comparative examples 1 and 2 correspond to honeycomb structures and evaluation samples, each formed of one kind of zeolite in a similar manner to Example 1. Kinds of ion-exchanged zeolite of Comparative examples 1 and 2 and evaluation results thereof obtained by using a simulation gas similar to that of Example 1 are shown in Table 1.

### (Evaluation results consideration)

The honeycomb structures (evaluation samples) of Examples 1 to 6 exhibit NOx converting ratios of 80% or more in any temperature ranges from 200 to 500°C. In particular, the NOx converting ratio at 200°C is 95 to 100%, which is distinctly superior. Moreover, the NOx converting ratio is kept at 80% or more even at 500°C, which is a temperature at which the NOx conversion is relatively difficult. On the other hand, the NOx converting ratio of the honeycomb structure (evaluation sample) shown as Comparative example 1 is as high as 100% at 200°C, however, has a strong tendency to be reduced as the temperature rises. When the temperature is 300°C or higher, the NOx converting ratio of the honeycomb structure (evaluation example) of Comparative example 1 is inferior to those of the honeycomb structures (evaluation samples) of Examples 1 to 6. In particular, the NOx converting ratio of the honeycomb structure (evaluation sample) of Comparative example 1 at 500°C is 70%, which is remarkably low. On the other hand, the NOx converting ratio of the honeycomb structure (evaluation sample) shown as Comparative example 2 at 300°C exhibits as good performance as the honeycomb structures (evaluation samples) of Examples 1 to 6. However, the converting performance of the NOx converting ratio of the honeycomb structure (evaluation sample) of Comparative example 2 is 70% at 200°C, which is distinctly inferior to those of the other honeycomb structures (evaluation samples).

In this manner, it is seen that the honeycomb structures shown in Examples 1 to 6 are favorably used for converting automotive exhaust gas, which requires a high NOx converting performance in a wide range of temperatures.

The honeycomb structure of the present invention exhibits a high NOx converting ratio in a wide range of temperatures and can be favorably used for converting automotive exhaust gas, which requires a high NOx converting performance.

## Claims

1. A honeycomb structure comprising:
a honeycomb unit having plural cells extending from one end face to another end face of the honeycomb unit in a longitudinal direction, said plural cells being separated by cell walls,
wherein the honeycomb unit includes an inorganic binder and zeolite ion-exchanged with two or more kinds of metal ions.

2. The honeycomb structure as claimed in claim 1, wherein said zeolite is ion-exchanged with at least one metal ion selected from Cu, Fe, Ni, Zn, Mn, Co, Ag, and V.

3. The honeycomb structure as claimed in claim 1 or 2, wherein said zeolite ion-exchanged with two or more kinds of metal ions is included in the honeycomb unit at different ratios in a direction of through-holes of the cells.

4. The honeycomb structure as claimed in any one of claims 1 to 3, wherein said zeolite is β-type zeolite, Y-type zeolite, ferrierite, ZSM-5 type zeolite, mordenite, faujasite, zeolite A, or zeolite L.

5. The honeycomb structure as claimed in any one of claims 1 to 4, wherein the honeycomb unit further includes an inorganic particle other than zeolite.

6. The honeycomb structure as claimed in claim 5, wherein the inorganic particle other than zeolite includes an alumina particle, a titania particle, a silica particle, a zirconia particle, or a precursor of the alumina particle, the titania particle, the silica particle, or the zirconia particle.

7. The honeycomb structure as claimed in any one of claims 1 to 6, wherein the honeycomb unit further includes an inorganic fiber.

8. The honeycomb structure as claimed in claim 7, wherein the inorganic fiber includes at least one of an alumina fiber, a silica fiber, a silicon carbide fiber, a silica alumina fiber, a glass fiber, a potassium titanate fiber, and an aluminum borate fiber.

9. The honeycomb structure as claimed in any one of claims 1 to 8, wherein the inorganic binder includes at least one of alumina sol, silica sol, titania sol, liquid glass, sepiolite, and attapulgite.

10. The honeycomb structure as claimed in any one of claims 1 to 9, wherein a plurality of the honeycomb units are bonded to each other by interposing an adhesive material.
